# EUROPEAN PATENT SPECIFICATION

(11) **EP 2 108 199 B1**
(45) Date of publication and mention of the grant of the patent: **18.02.2015**
(21) Application number: 06845760.5
(22) Date of filing: 19.12.2006
(51) Int. Cl.: H01M 8/04, H01M 8/02, H01M 8/10

(54) **VARIABLE FUEL PRESSURE CONTROL FOR A FUEL CELL**
VARIABLE BRENNSTOFF-DRUCKREGELUNG FÜR EINE BRENNSTOFFZELLE
CONTRÔLE DE LA PRESSION DE COMBUSTIBLE MIXTE POUR UNE PILE À COMBUSTIBLE

(43) Date of publication of application: 14.10.2009
(73) Proprietor: United Technologies Corporation, Hartford, CT 06101 (US)
(72) Inventor: YADHA, Venkateshwarlu, Richardson, TX 75081 (US); WILSON, Matthew P., Groton, Connecticut 06340 (US); NARASIMHAMURTHY, Praveen, Vernon, Connecticut 06066 (US)
(74) Representative: Wohlfrom, Karl-Heinz
(86) International application number: PCT/US2006/048331
(87) International publication number: WO 2008/076112

(56) References cited:
- WO-A2-2005/078845
- US-A- 5 441 821
- US-A1- 2002 142 197
- US-A1- 2004 258 973
- US-A1- 2005 095 475
- US-B1- 6 187 466
- US-B1- 6 277 509
- US-B1- 6 673 481

## Description

### BACKGROUND

This application relates to a fuel cell, and more particularly, the invention relates to a method and apparatus for regulating a fuel pressure provided to a fuel cell anode. The application also relates to maintaining a desired differential pressure across a water transport plate within the fuel cell.

Fuel cells include a cathode and an anode that cooperate with an electrode assembly to produce electricity resulting from an electrochemical process. The anode receives hydrogen, and the cathode receives air. The hydrogen and air react during the electrochemical process to produce electricity. Water transport plates are used in some fuel cells to manage water in a water flow field adjoining the cathode and/or anode. Maintaining water balance better ensures fuel cell operational efficiency.

The consumption of hydrogen within the fuel cell must be managed to achieve industry requirements for fuel efficiency. Fuel pressure fluctuates during fuel cell operation making fuel consumption difficult to manage. In one example effort to achieve fuel efficiency, fuel cells have been developed that employ a recirculation loop that returns unused fuel from the anode to the anode's inlet. Some recirculation loops have employed blowers to ensure an adequate supply of fuel to the inlet.

It is desirable that the fuel pressure supplied to the anode generally track the air pressure supplied to the cathode, in particular during transient conditions, so that adequate fuel is supplied to the anode to achieve the most efficient production of electricity. Fuel cells incorporating a recirculation loop with a blower have not employed features that ensure the fuel pressure provided to the inlet increases and decreases with increasing and decreasing air consumption by the cathode.

An ejector has been used to regulate the fuel pressure provided to the anode. The fuel from the recirculation loop is provided to a suction inlet of the ejector. A sense line downstream from the ejector communicates with a dome pressure regulator upstream from the ejector to ensure that a desired fuel pressure is achieved by the ejector at the anode inlet.

Some arrangements utilizing an ejector to provide fuel to the anode also include a line that communicates the cathode air pressure to the dome pressure regulator, which ensures that the fuel pressure more closely tracks the air pressure. However, prior art arrangements do not address regulating the pressure within the air and fuel flow fields to maintain a desired differential pressure across the water transport plates, which is necessary for water balance within the fuel cell. Having too great of a pressure within a flow field may force water out of the water transport plate and into the water flow field, which may dry out the associated anode and/or cathode. Having too little pressure in the flow field may flood the anode and/or cathode with water from the water flow field. This is particularly true for cooling systems in which a pump is used to circulate the water in the flow field for cooling. The pump may increase the water flow field pressure and undesirably reduce the differential pressure across the water transport plate making it difficult to maintain water balance.

WO 2005/078845 A2 discloses a fuel cell system wherein the air pressure, the hydrogen pressure and the pressure in the water transport plates are determined in consideration of electric power generating efficiency and water balance and managed to respective given differential pressures to preclude the occurrence of distortion in the electrolyte membrane and the separators. Hydrogen is fed from a hydrogen supply through a pressure regulator valve and through an ejector into the anode electrode, and hydrogen not consumed in the anode electrode is circulated back to the ejector. A pressure sensor measures the pressure of hydrogen flowing to the anode electrode inlet, and the hydrogen pressure regulator valve is driven responsive to the pressure measured by the pressure sensor. The air pressure of the cathode electrode is controlled by an air pressure control means by which an air pressure, detected by a pressure sensor at the cathode electrode inlet, is fed back to an air pressure regulator valve at the cathode electrode outlet, which is consequently driven.

US 6 187 466 B1 relates to water management within fuel cells including the containment of reactant gases within the fuel cell. Reactant gases are sealed within the fuel cell by utilizing water, the by-product of the electrochemical reaction and the coolant within the cell, to establish a liquid water capillary edge seal within water transport plates without the need for additional gaskets or impregnation of edge portions of the water transport plate. This is achieved by employing a water pressure which is less than the gas pressure in combination with a specific construction of the water transport plates.

US 2002/0142197 A1 discloses a system and method for draining a remaining water in a fuel cell upon stop of the fuel cell operation. Fuel from a fuel supply passes a fuel pressure control section and an ejector, and then enters the fuel electrode. An oxidizing gas supply supplies air to the air electrode, and also supplies air as a signal pressure used in the fuel pressure control section, in order to establish a predetermined differential pressure between the supply pressure of the fuel and the supply pressure of the oxidizing gas.

What is needed is a fuel cell that recirculates unused fuel while maintaining a desired fuel pressure relative to the air pressure and while achieving a desired differential pressure across the water transport plate.

### SUMMARY

Subject matter of the present is a fuel cell as claimed in claim 1 and a method of controlling water balance as claimed in claim 7. Embodiments of the invention are claimed in the respective dependent claims.

A fuel cell includes a cathode having an air flow field. An anode includes an inlet and an outlet for providing unused fuel to a fuel recycling line in one example. In one example embodiment, an ejector includes a suction inlet, a motive inlet for receiving fuel and a discharge outlet for providing a desired amount of fuel to the inlet. A blower is in communication with the recycling line for providing unused fuel to the suction inlet to achieve the desired amount of fuel. A pressure regulator is arranged upstream from the ejector and communicates with the air flow field for adjusting a fuel pressure at the motive inlet in response to an air pressure associated with the air flow field. Providing air pressure feedback to the pressure regulator enables the fuel pressure to better track the air pressure during fuel cell operation.

The cathode and/or anode includes a porous water transport plate associated with the air flow field and/or fuel flow field respectively. A back pressure valve is arranged downstream from the air flow field for producing an air back pressure that generates a desired differential pressure across the water transport plate. The back pressure valve is controlled to achieve the desired differential pressure across the water transport plate so that the fuel cell maintains water balance.

These and other features of the application can be best understood from the following specification and drawings, the following of which is a brief description.

### BRIEF DESCRIPTION OF THE DRAWINGS

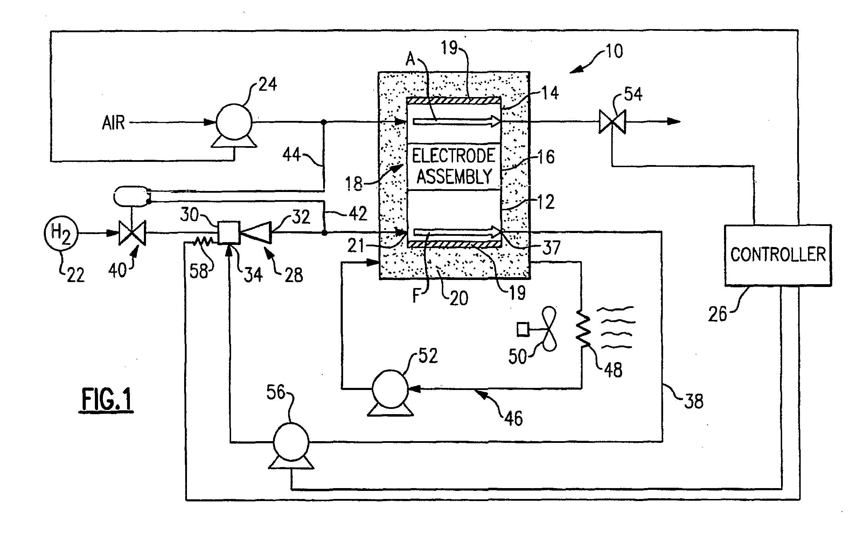

Figure 1 is a schematic view of a fuel cell including a fuel recirculation loop, a cooling loop and a control system.

### DETAILED DESCRIPTION OF THE PREFERRED EMBODIMENT

A fuel cell 10 is schematically shown in Figure 1. The fuel cell 10 includes an anode 12 and a cathode 14 arranged on either side of an electrode assembly 16. The anode, cathode and electrode assembly 12, 14, 16 provide a cell 18. Typically multiple cells are arranged in a stack to produce a desired amount of electricity.

In one example, the anode 12 and cathode 14 include a water transport plate 19 that is in communication with a water flow field 20. The water flow field 20 hydrates the water transport plates 19 and receives product water from the cell 18 resulting from the electrochemical reaction within the cell. In the example, the water transport plate 19 is porous. One or both of the cathode and anode, 14, 12 may include the porous water transport plate 19. The water transport plate 19 typically requires a desired differential pressure across it to achieve desired water balance during fuel cell operation so that the water transport plates 19 are hydrated but do not flood the air or fuel flow fields. The water transport plates 19 also provide a wet seal between the anode 12 and cathode 14 to prevent undesired commingling of the hydrogen and air.

The anode 12 includes a fuel flow field F receiving hydrogen from a fuel source 22. The cathode 14 includes an air flow field A receiving an oxidant, such as air, provided by a pump 24. A controller 26 controls the operation of the pump 24 to provide a desired amount of air to the fuel cell 10 based upon its operational needs.

The anode 12 includes an inlet 21 and an outlet 37. An ejector 28 is arranged between the fuel source 22 and the inlet 21 to provide fuel to the anode 12. The ejector 28 includes a motive inlet 30 that receives fuel from the fuel source 22. A discharge outlet 32 provides fuel from the ejector 28 to the anode 12. A fuel recycling line 38 circulates unused fuel from the outlet 37 to a suction inlet 34 of the ejector 28. In the example shown, a blower 56 is used to return the unused fuel from the anode 12 to it under conditions in which the ejector 28 is inefficient. The controller 26 communicates with the blower 56 to regulate its operation based upon fuel cell characteristics.

A dome pressure regulator 40 is arranged upstream from the ejector 28 to regulate the fuel pressure provided to the anode 12. A sense line 42 communicates with the fuel supply from a location downstream from the ejector 28 to the dome pressure regulator 40 to provide feedback to the dome pressure regulator 40, which ensures that a desired amount of fuel is being provided by the ejector 28. In one example, the sense line 42 fluidly communicates the pressure downstream from the ejector 28 to the dome pressure regulator 40.

A cathode inlet pressure line 44 is in communication with the air flow field A and the dome pressure regulator 40. The cathode inlet pressure line 44 regulates the fuel pressure to the motive inlet 30 to ensure that the fuel pressure provided to the anode 12 from the discharge outlet 32 remains above the air pressure in the cathode 14, in one example embodiment. The input provided from the cathode inlet pressure line 44 to the dome pressure regulator 40 also ensures that the fuel pressure tracks the air pressure, in particular during transients. That is, the input from the cathode inlet pressure line 44 ensures fuel pressure increases and decreases as the air pressure increases and decreases, respectively. In one example, the difference between the fuel and air pressures remains the same throughout operation of the fuel cell 10.

A cooling loop 46 is in communication with water from the water flow field 20. Water that has received heat from the cells stack (for example, due to the electrochemical process) is circulated to a heat exchanger 48 (for example a condenser). Heat is removed from the water at the heat exchanger 48 via a working fluid such as air circulating through the heat exchanger 48 using a fan 50. In the example, a coolant pump 52 is used to circulate the water within the cooling loop 46. The coolant pump 52 typically produces a pressure within the water flow field 20 that affects the differential pressure across the wet seal in the water transport plate 19. The cooled water is circulated back to the water flow field 20.

It is desirable to regulate the differential pressure across the wet seal of the water transport plate 19 to ensure that the wet seal remains integral to prevent reactant gas crossover. Additionally, the differential pressure should be maintained in order to maintain water balance. That is, the differential pressure across the water transport plate 19 should not result in flooding or dry-out of the anode and/or cathode 12, 14. To this end, a back pressure valve 54 is arranged downstream from the air flow field A to regulate the air pressure. The back pressure valve 54 communicates with the controller 26, which may monitor various pressures within the fuel cell 10 (not shown), to obtain the desired back pressure. Example pressures that are monitored include atmospheric, fuel, air and coolant pressures.

In one example, increasing the back pressure on the air flow field A increases the air pressure within the cathode 14. This may be particularly desirable in situations in which the coolant pump 52 produces a pressure within the water flow field 20 that would result in an undesired flooding of the cathode 14. Since the fuel pressure tracks the air pressure as a result of the cathode inlet pressure line 44 communicating with the dome pressure regulator 40, the fuel pressure is also increased as a result of an increase in back pressure by the back pressure valve 54. As a result, flooding of the anode is also avoided. Conversely, a reduction in back pressure using the back pressure valve 54 would result in a drop in pressure in both the anode and cathode 12, 14, which can be used to increase the hydration of the water transport plate 19.

A heater 58 can be arranged proximate to the ejector 28 to avoid undesired icing of the ejector 28 during cold weather operation of the fuel cell 10. Operation of the heater 58 is regulated by the controller in the example.

Although a preferred embodiment has been disclosed, a worker of ordinary skill in this art would recognize that certain modifications would come within the scope of the claims. For that reason, the following claims should be studied to determine their true scope and content.

## Claims

1. A fuel cell (10) comprising:
a cathode (14) having an oxidant flow field (A);
a water transport plate (19) adjacent to at least one of the oxidant flow field (A) and a fuel flow field (F);
a back pressure valve (54) downstream from the oxidant flow field (A) for producing an oxidant back pressure that generates a desired differential pressure across the water transport plate (19); and
an ejector (28) arranged upstream from the fuel flow field (F) and including a motive inlet (30),
**characterized in that** the back pressure valve (54) communicates with a controller (26) in order to regulate a differential pressure across the water transport plate (19) and controls a fuel pressure at the motive inlet (30).

2. The fuel cell according to claim 1, wherein the water transport plate (19) is porous.

3. The fuel cell according to claim 2, wherein the desired differential pressure maintains a desired water balance within the fuel cell.

4. The fuel cell according to claim 1, comprising a pressure regulator (40) arranged upstream from the ejector (28), the pressure regulator (40) increasing and decreasing the fuel pressure in response to an increase and decrease in air pressure, respectively.

5. The fuel cell according to claim 1, further comprising:
the cathode (14) having a cathode inlet coupled to the oxidant flow field (A) coupled to a cathode outlet;
the backpressure valve (54) coupled to said cathode outlet, wherein
an oxidant flows from an oxidant source through said cathode inlet into the oxidant flow field (A) into said cathode outlet through the backpressure valve (54);
an anode (12) having an anode inlet (21) coupled to a fuel flow field (F) coupled to an anode outlet (37);
a water transport plate (19) adjacent at least one of the oxidant flow field (A) and the fuel flow field (F), said water transport plate (19) configured to maintain a wet seal; and
a fuel flow control valve (40) coupled downstream of a source (22) of fuel and upstream of said anode inlet (21), said fuel flow control valve operatively coupled to the oxidant, said fuel flow control valve (40) operatively coupled to said fuel source (22), said fuel flow control valve (40) and the backpressure valve (54) configured to maintain said wet seal between said oxidant and said fuel across said water transport plate (19).

6. The fuel cell of claim 5 further, comprising:
a fuel recycle line (38) coupled between said anode outlet (37) and said anode inlet (21); and
a recycle pump (56) coupled in said fuel recycle line, wherein said recycle pump is configured to recycle anode exhaust from said anode outlet to said anode inlet.

7. A method of controlling water balance within a fuel cell (10) comprising the steps of:
providing a water transport plate (19) adjacent to at least one of an air flow field (A) and a fuel flow field (F);
regulating an air back pressure downstream from the air flow field (A);
regulating a fuel pressure based upon an air flow field inlet pressure and a recirculated unused fuel pressure; and
maintaining a wet seal using a desired differential pressure across the water transport plate (19) based upon the regulated pressures,
the method being **characterized by** regulating a differential pressure across the water transport plate (19) and a fuel pressure to the fuel flow field (F) with the air back pressure.

8. The method according to claim 7, wherein the fuel pressure is regulated based upon a differential pressure between the air (A) and fuel (F) flow fields.

9. The method according to claim 8, including maintaining the fuel pressure above the air pressure.

10. The method of claim 7, comprising the step of providing a desired amount of fuel to the anode including the step of pumping the unused fuel.

## Patentansprüche

1. Brennstoffzelle (10) aufweisend:
eine Kathode (14) mit einem Oxidationsmittel-Strömungsfeld (A);
eine Wassertransportplatte (19) benachbart zu dem Oxidationsmittel-Strömungsfeld (A) und/oder einem Brennstoff-Strömungsfeld (F);
ein Rückdruckventil (54) stromab von dem Oxidationsmittel-Strömungsfeld (A) zur Erzeugung eines Oxidationsmittel-Rückdrucks, der eine gewünschte Druckdifferenz über die Wassertransportplatte (19) bewirkt;
und
einen Ejektor (28), der stromauf von dem Brennstoff-Strömungsfeld (F) angeordnet ist und einen Treibmitteleinlass (30) umfasst,
**dadurch gekennzeichnet, dass** das Rückdruckventil (54) mit einer Kontrolleinrichtung (26) in Verbindung steht, um eine Druckdifferenz über die Wassertransportplatte (19) zu regulieren, und einen Brennstoffdruck an dem Treibmitteleinlass (30) regelt.

2. Brennstoffzelle nach Anspruch 1, bei der die Wassertransportplatte (19) porös ist.

3. Brennstoffzelle nach Anspruch 2, bei der die gewünschte Druckdifferenz ein gewünschtes Wassergleichgewicht in der Brennstoffzelle aufrecht erhält.

4. Brennstoffzelle nach Anspruch 1, aufweisend einen Druckregler (40), der stromauf von dem Ejektor (28) angeordnet ist, wobei der Druckregler (40) den Brennstoffdruck als Reaktion auf ein Ansteigen und Abfallen des Luftdrucks erhöht bzw. verringert.

5. Brennstoffzelle nach Anspruch 1, außerdem aufweisend:
die Kathode (14) mit einem Kathodeneinlass, der verbunden ist mit dem Oxidationsmittel-Strömungsfeld (A), das mit einem Kathodenauslass verbunden ist;
das Rückdruckventil (54), das mit dem Kathodenauslass verbunden ist,
wobei ein Oxidationsmittel von einer Oxidationsmittelquelle durch den Kathodeneinlass in das Oxidationsmittel-Strömungsfeld (A) in den Kathodenauslass durch das Rückdruckventil (54) strömt;
eine Anode (12) mit einem Anodeneinlass (21), der verbunden ist mit einem Brennstoff-Strömungsfeld (F), das mit einem Anodenauslass (37) verbunden ist;
eine Wassertransportplatte (19) benachbart zu dem Oxidationsmittel-Strömungsfeld (A) und/oder dem Brennstoff-Strömungsfeld (F), wobei die Wassertransportplatte (19) dazu ausgelegt ist, eine Nassdichtung aufrecht zu erhalten; und
ein Brennstoffströmungs-Regelventil (40), das stromab von einer Brennstoffquelle (22) und stromauf von dem Anodeneinlass (21) angebracht ist, wobei das Brennstoffströmungs-Regelventil operativ an das Oxidationsmittel gekoppelt ist, wobei das Brennstoffströmungs-Regelventil (40) operativ an die Brennstoffquelle (22) gekoppelt ist, wobei das Brennstoffströmungs-Regelventil (40) und das Rückdruckventil (54) dazu ausgelegt sind, die Nassdichtung zwischen dem Oxidationsmittel und dem Brennstoff über die Wassertransportplatte (19) aufrecht zu erhalten.

6. Brennstoffzelle nach Anspruch 5, außerdem aufweisend:
eine Brennstoff-Rückführleitung (38), die zwischen dem Anodenauslass (37) und dem Anodeneinlass (21) angebracht ist; und
eine Umlaufpumpe (56), die in der Brennstoff-Rückführleitung angebracht ist, wobei die Umlaufpumpe dazu ausgelegt ist, Anodenabgas aus dem Anodenauslass zu dem Anodeneinlass zurückzuführen.

7. Verfahren zum Einstellen eines Wassergleichgewichts in einer Brennstoffzelle (10), folgende Schritte aufweisend:
Bereitstellen einer Wassertransportplatte (19) benachbart zu einem Luft-Strömungsfeld (A) und/oder einem Brennstoff-Strömungsfeld (F);
Regulieren eines Luft-Rückdrucks stromab von dem Luft-Strömungsfeld (A);
Regulieren eines Brennstoffdrucks auf der Basis eines Luft-Strömungsfeld-Einlassdrucks und eines Drucks von zurückgeführtem unverbrauchtem Brennstoff; und
Aufrechterhalten einer Nassdichtung unter Verwendung einer gewünschten Druckdifferenz über die Wassertransportplatte (19) auf der Basis der regulierten Drücke,
wobei das Verfahren **gekennzeichnet ist durch** Regulieren einer Druckdifferenz über die Wassertransportplatte (19) und eines Brennstoffdrucks zu dem Brennstoff-Strömungsfeld (F) mittels des Luft-Rückdrucks.

8. Verfahren nach Anspruch 7, bei dem der Brennstoffdruck reguliert wird auf der Basis einer Druckdifferenz zwischen dem Luft-Strömungsfeld (A) und dem Brennstoff-Strömungsfeld (F).

9. Verfahren nach Anspruch 8, umfassend ein Halten des Brennstoffdrucks über dem Luftdruck.

10. Verfahren nach Anspruch 7, aufweisend den Schritt des Zuführens einer gewünschten Menge an Brennstoff zu der Anode einschließlich des Schritts des Pumpens des unverbrauchten Brennstoffs.

## Revendications

1. Pile à combustible (10) comprenant :
une cathode (14) possédant un champ de flux d'oxydant (A) ;
une plaque de transport d'eau (19) adjacente à au moins un champ choisi parmi le champ de flux d'oxydant (A) et un champ de flux de combustible (F) ;
une vanne de régulation de contrepression (54) en aval par rapport au champ de flux d'oxydant (A) pour obtenir une contrepression d'oxydant qui génère une pression différentielle désirée à travers la plaque de transport d'eau (19) ; et
un éjecteur (28) monté en amont par rapport au champ de flux de combustible (F) et englobant une entrée mobile (30) ;
**caractérisée en ce que** la vanne de régulation de contrepression (54) établit une communication avec un contrôleur (26) afin de réguler une pression différentielle à travers la plaque de transport d'eau (19) et règle une pression de combustible à l'entrée mobile (30).

2. Pile à combustible selon la revendication 1, dans laquelle la plaque de transport d'eau (19) est poreuse.

3. Pile à combustible selon la revendication 2, dans laquelle la pression différentielle désirée maintient un équilibre d'eau désiré au sein de la pile à combustible.

4. Pile à combustible selon la revendication 1, comprenant un régulateur de pression (40) monté en amont par rapport à l'éjecteur (28), le régulateur de pression (40) augmentant et diminuant la pression de combustible en réponse à une augmentation et à une diminution de la pression d'air, respectivement.

5. Pile à combustible selon la revendication 1, comprenant en outre :
le fait que la cathode (14) possède une entrée de cathode qui est couplée au champ de flux d'oxydant (A) couplé à une sortie de cathode ;
le fait que la vanne de régulation de contrepression (54) est couplée à ladite sortie de cathode, un oxydant s'écoulant depuis une source d'oxydant à travers ladite entrée de cathode jusque dans le champ de flux d'oxydant (A) dans ladite sortie de cathode via la vanne de régulation de contrepression (54) ;
une anode (12) possédant une entrée d'anode (21) couplée à un champ de flux de combustible (F) couplé à une sortie d'anode (37) ;
une plaque de transport d'eau (19) adjacente à au moins un champ choisi parmi le champ de flux d'oxydant (A) et le champ de flux de combustible (F), ladite plaque de transport d'eau (19) étant configurée pour maintenir un joint d'étanchéité à l'humidité ; et
une vanne de régulation du flux de combustible (40) couplée en aval d'une source (22) de combustible et en amont de ladite entrée d'anode (21), ladite vanne de régulation du flux de combustible étant couplée de manière opérante à l'oxydant, ladite vanne de régulation du flux de combustible (40) étant couplée de manière opérante à ladite source de combustible (22), ladite vanne de régulation du flux de combustible (40) et la vanne de régulation de contrepression (54) étant configurées pour maintenir ledit joint d'étanchéité à l'humidité entre ledit oxydant et ledit combustible à travers ladite plaque de transport d'eau (19).

6. Pile à combustible selon la revendication 5, comprenant en outre :
un conduit de recyclage de combustible (38) couplé entre ladite sortie d'anode (37) et ladite entrée d'anode (21) ; et
une pompe de recyclage (56) couplée dans ledit conduit de recyclage de combustible, ladite pompe de recyclage étant configurée pour recycler l'échappement anodique depuis ladite sortie d'anode jusqu'à ladite entrée d'anode.

7. Procédé pour régler un équilibre d'eau au sein d'une pile à combustible (10), comprenant les étapes consistant à :
procurer une plaque de transport d'eau (19) en position adjacente à au moins un champ choisi parmi un champ de flux d'air (A) et un champ de flux de combustible (F) ;
réguler une contrepression d'air en aval par rapport au champ de flux d'air (A) ;
réguler une pression de combustible en se basant sur une pression d'entrée du champ de flux d'air et une pression de combustible inutilisé remis en circulation ; et
maintenir un joint d'étanchéité à l'humidité en utilisant une pression différentielle désirée à travers la plaque de transport d'eau (19) en se basant sur les pressions régulées ;
le procédé étant **caractérisé par** le fait de réguler une pression différentielle à travers la plaque de transport d'eau (19) et une pression de combustible en direction du champ de flux de combustible (F) avec la contrepression d'air.

8. Procédé selon la revendication 7, dans lequel la pression de combustible est régulée en se basant sur une pression différentielle entre le champ de flux d'air (A) et le champ de flux de combustible (F).

9. Procédé selon la revendication 8, englobant le fait de maintenir la pression de combustible au-dessus de la pression d'air.

10. Procédé selon la revendication 7, comprenant l'étape consistant à procurer une quantité désirée de combustible à l'anode, englobant l'étape consistant à pomper le combustible inutilisé.
